# FASCICULE DE BREVET EUROPEEN

(11) **EP 3 823 944 B1**
(45) Date de publication et mention de la délivrance du brevet: **07.09.2022**
(21) Numéro de dépôt: 19740029.4
(22) Date de dépôt: 19.07.2019
(51) Int. Cl.: C04B 35/488, B24C 1/00, C04B 35/624, C04B 35/636, C09K 3/14, B24C 1/10, B24C 11/00

(54) **PROCÉDÉ DE GRENAILLAGE**
KUGELSTRAHLVERFAHREN
SHOT-PEENING PROCESS

(30) Priorité: 20.07.2018 FR 1856745
(43) Date de publication de la demande: 26.05.2021
(73) Titulaire: SAINT-GOBAIN CENTRE DE RECHERCHES ET D'ETUDES EUROPEEN, 92400 Courbevoie (FR)
(72) Inventeur: BEAUDONNET, Anne-Laure, 84440 ROBION (FR); CABRERO, Julien, 86000 POITIERS (FR); LEVY, Benjamin, Gilbert, Robert, 13001 MARSEILLE (FR)
(74) Mandataire: Nony
(86) Numéro de dépôt international: PCT/EP2019/069555
(87) Numéro de publication internationale: WO 2020/016430

(56) Documents cités:
- EP-B1- 2 231 363
- WO-A1-2010/140121
- WO-A1-2014/020522
- JP-A- H06 335 865

## Description

### Domaine technique

L'invention concerne un procédé de grenaillage, notamment pour le traitement de surfaces métalliques, par exemple en acier.

### Art antérieur

Le grenaillage consiste à projeter à grande vitesse des particules, généralement des billes, sur la pièce à traiter. Les particules sont réalisées dans des matériaux de dureté adaptée à l'objectif à atteindre. On utilise couramment des billes en acier ou des billes céramiques. Le grenaillage peut être mis en œuvre dans un but de nettoyage, par exemple pour l'enlèvement de la rouille (décalaminage), pour modifier l'aspect de surface d'une pièce, notamment la rugosité, la luminosité ou la brillance (en anglais *« cosmetic finishing »*), ou pour créer des précontraintes de compression, ou « contraintes résiduelles », à la surface d'une pièce (« grenaillage de précontrainte », en anglais « shot-peening »). De telles précontraintes permettent d'améliorer les propriétés de la pièce traitée par durcissement superficiel (écrouissage). Par exemple, elles peuvent permettre d'augmenter la résistance à la fatigue ou la résistance à la corrosion. Le grenaillage de précontrainte est ainsi classiquement mis en œuvre, par exemple, pour améliorer la tenue en service de pièces fortement sollicitées comme par exemple des pièces d'automobiles, en particulier des pignons ou des arbres de transmission, des ressorts, des barres de torsion, des bielles, ou des vilebrequins.

EP 2 231 363 décrit un procédé de grenaillage de précontrainte permettant de créer efficacement des précontraintes de compression élevées en surface et dans la couche superficielle de la pièce traitée. Ce procédé comporte une opération de projection de particules présentant une masse volumique apparente comprise entre 4,0 et 5,0 g/cm³. EP 2 231 363 enseigne que lorsque la masse volumique apparente des particules projetées est supérieure à 5 g/cm³, l'épaisseur de la couche superficielle affectée par le grenaillage diminue.

Enfin, l'utilisation en grenaillage d'une poudre de média comportant de la zircone partiellement stabilisée, passant à travers un tamis d'ouverture inférieure ou égale à 2,36 mm, présentant une masse volumique relative supérieure ou égale à 95%, et dont les particules présentent une taille moyenne de grains inférieure à 1 µm et une dureté Hv supérieure à 1000 est connue de US 5,409,415.

La projection de billes céramiques ne permet pas toujours de créer des précontraintes de compression sur une épaisseur suffisante. Il existe un besoin pour un procédé de grenaillage permettant de créer efficacement des précontraintes de compression élevées dans une couche superficielle de la pièce traitée.

Un but de l'invention est de répondre, au moins partiellement, à ce besoin.

### Résumé de l'invention

L'invention propose un procédé utilisant une poudre de grenaillage constituée de particules frittées, plus de 95% en masse des particules étant des billes, la poudre présentant
- une analyse chimique telle que, en pourcentages en masse sur la base des oxydes,
- ZrO₂ partiellement stabilisée avec Ce02 et Y₂O₃ : complément à 100%, CeO₂ et Y₂O₃ étant présents en des quantités telles que, en pourcentage molaire sur la base de la somme de ZrO₂, CeO₂ et Y₂O₃,

| | |
|---|---|
| CeO₂: | 2,5 - 11 mol% et |
| Y₂O₃ : | 0,5 - 2 mol%, |

- Al₂O₃ : 3 - 50%
- additif choisi parmi CaO, les oxydes de manganèse, ZnO, les oxydes de praséodyme, SrO, les oxydes de cuivre, Nd₂O₃, BaO, les oxydes de fer, et leurs mélanges : 0,2 - 6%
la teneur en CaO étant inférieure à 2%,
- éléments autres que ZrO₂, CeO₂, Y₂O₃,Al₂O₃, CaO, les oxydes de manganèse, ZnO, les oxydes de praséodyme, SrO, les oxydes de cuivre, Nd₂O₃, BaO, et les oxydes de fer : ≤ 5%
les oxydes de manganèse, les oxydes de praséodyme, les oxydes de cuivre et les oxydes de fer étant exprimés sous la forme MnO, Pr₆O₁₁, CuO et Fe₂O₃, respectivement, et
- une masse volumique relative supérieure à 95%.

Comme cela apparaîtra plus en détail dans la suite de la description, de manière surprenante, la projection d'une telle poudre permet d'obtenir des précontraintes de compression élevées dans une couche superficielle de la pièce traitée.

Une poudre utilisée dans le procédé selon l'invention peut encore comporter une ou plusieurs des caractéristiques optionnelles suivantes :
- l'additif est choisi parmi CaO, les oxydes de manganèse, ZnO, SrO, BaO, et leurs mélanges ;
- l'additif comporte CaO, la teneur en CaO étant supérieure à 0,2%, et un deuxième composé d'additif choisi parmi les oxydes de manganèse, ZnO, SrO, BaO et leurs mélanges, la teneur dudit deuxième composé d'additif étant supérieure à 0,1%, en pourcentages en masse sur la base des oxydes de la poudre ;
- l'additif est un mélange d'un ou plusieurs oxyde(s) de manganèse et de CaO, la teneur en oxyde(s) de manganèse exprimée sous la forme MnO étant supérieure à 0,1% et inférieure à 4% et la teneur en CaO étant supérieure à 0,2% et inférieure à 4%, en pourcentage en masse sur la base des oxydes ;
- la teneur en « éléments autres que ZrO₂, CeO₂, Y₂O₃,Al₂O₃, CaO, les oxydes de manganèse, ZnO, les oxydes de praséodyme, SrO, les oxydes de cuivre, Nd₂O₃, BaO, et les oxydes de fer » est inférieure à 2,0%, en pourcentage massique sur la base des oxydes ;
- la teneur en SiO₂ est inférieure à 4%, de préférence inférieure à 3%, de préférence inférieure à 2%, de préférence inférieure à 1,5%, de préférence inférieure à 1%, voire inférieure à 0,5%, en pourcentage massique sur la base des oxydes ;
- la teneur en Al₂O₃ est supérieure à 8% et inférieure à 40%, en pourcentage massique sur la base des oxydes ;
- la teneur molaire en Y₂O₃ est supérieure à 0,7% et inférieure à 1,7%, en pourcentages molaires sur la base de la somme de ZrO₂, CeO₂ et Y₂O₃ ;
- la masse volumique relative de la poudre est supérieure à 98%.

Dans un mode de réalisation particulier, une poudre utilisée dans le procédé selon l'invention peut encore comporter
une ou plusieurs des caractéristiques optionnelles suivantes :
- la teneur molaire en CeO₂ est comprise entre 8,0% et 10,0%, en pourcentages molaires sur la base de la somme de ZrO₂, CeO₂ et Y₂O₃ ;
- la teneur en Al₂O₃ est supérieure à 15% et inférieure à 35%, et/ou la teneur en SiO₂ est inférieure à 1,5%, en pourcentage massique sur la base des oxydes.

Dans un autre mode de réalisation particulier, une poudre utilisée dans le procédé selon l'invention peut encore comporter une ou plusieurs des caractéristiques optionnelles suivantes :
- la teneur molaire en Ce02 est supérieure à 3% et inférieure à 6,0%, en pourcentages molaires sur la base de la somme de ZrO₂, Ce02 et Y₂O₃ ;
- la teneur en Al₂O₃ est supérieure à 5% et inférieure à 19%, en pourcentage massique sur la base des oxydes.

L'invention concerne un procédé de grenaillage comportant une étape de projection d'une poudre sur une surface d'une pièce à traiter, ladite poudre étant conforme à celle mentionnée en revendication 1.

Le procédé peut encore comporter une ou plusieurs des caractéristiques optionnelles suivantes :
- les particules sont projetées à une vitesse supérieure à 40 m/s, suivant une direction formant un angle de projection avec la surface à traiter supérieur à 45° ;
- la pièce à traiter est choisie dans le groupe formé par une pièce automobile, une pièce d'un engin aéronautique, un bijou, une montre, un bracelet, un collier, une bague, une broche, une épingle de cravate, un sac à main, un meuble, un ustensile ménager, une poignée, un bouton, un placage, une partie visible d'un équipement de bien de consommation, une partie de monture de lunettes, un article de vaisselle et un cadre.

L'invention concerne enfin l'utilisation d'un procédé selon l'invention pour créer des précontraintes de compression dans la couche superficielle d'une pièce à traiter, la poudre projetée présentant une taille médiane D₅₀ supérieure à 40 µm et inférieure à 1200 µm, ou pour modifier l'aspect de la surface d'une pièce à traiter, la poudre projetée présentant une taille médiane D₅₀ inférieure à 200 µm.

### Définitions

Par « bille », on entend une particule présentant une sphéricité, c'est-à-dire un rapport entre son plus petit diamètre de Ferret et son plus grand diamètre de Ferret, supérieure ou égale à 0,75, quelle que soit la façon par laquelle cette sphéricité a été obtenue.

Par « poudre de billes », on entend une poudre comportant plus de 95% en masse de billes.

Par « bille frittée », on entend une bille obtenue par mélange de matières premières appropriées puis mise en forme à cru de ce mélange et cuisson de la bille crue résultante à une température et pendant un temps suffisants pour obtenir le frittage de cette bille crue. Une bille frittée est constituée de « grains » liés les uns aux autres lors du frittage.

La « taille » d'une particule d'une poudre est classiquement sa dimension mesurée au moyen d'un granulomètre laser.

On appelle « percentiles » 50 (notée D₅₀) et 99,5 (notée D_{99,5}), les tailles de particules ou de billes correspondant aux pourcentages égaux respectivement à 50% et 99,5%, en masse, sur la courbe de distribution granulométrique cumulée des tailles de particules, respectivement de billes de la poudre, lesdites tailles de particules, respectivement de billes étant classées par ordre croissant. Selon cette définition, 99,5% en masse des particules ou des billes de la poudre ont ainsi une taille inférieure à D_{99,5} et 0,5% des particules ou des billes, en masse, présentent une taille supérieure ou égale à D_{99,5}. Les percentiles sont déterminés à l'aide d'une distribution granulométrique réalisée à l'aide d'un granulomètre laser.

On appelle « taille médiane » d'une poudre de particules ou de billes, le percentile 50. La taille médiane divise donc les particules, les billes respectivement, de la poudre en première et deuxième populations égales en masse, ces première et deuxième populations ne comportant que des particules, des billes respectivement, présentant une taille supérieure ou égale, ou inférieure respectivement, à la taille médiane.

On appelle « taille maximale » d'une poudre de particules ou de billes, le percentile 99,5.

La « sphéricité médiane » d'une poudre divise les particules de cette poudre en première et deuxième populations égales en masse, ces première et deuxième populations ne comportant que des particules présentant une sphéricité supérieure ou égale, ou inférieure respectivement, à la sphéricité médiane.

Dans un souci de clarté, on utilise les termes « ZrO₂ », « Hf02 » et « Al₂O₃ » pour désigner les oxydes de Zr, Hf et Al dans la composition, respectivement, et « zircone », « hafnie » et « corindon » pour désigner des phases cristallisées de ces oxydes constituées de ZrO₂, de HfO₂ et de Al₂O₃, respectivement. Ces oxydes peuvent cependant être également présents sous d'autres phases. En particulier Al₂O₃ peut être présent combiné à d'autres oxydes dans les nodules allongés alumineux.

Lorsqu'il est fait référence à ZrO₂, il y a lieu de comprendre (ZrO₂+HfO₂), avec HfO₂ < 5%, de préférence Hf02 < 3%, de préférence Hf02 < 2%. En effet, un peu de HfO₂, chimiquement indissociable de Zr02 et présentant des propriétés semblables, est toujours naturellement présent dans les sources de zircone. HfO₂ n'est alors pas considéré comme une impureté.

Une teneur totale de plusieurs oxydes, par exemple Zr02 + Si02 + Al₂O₃ + Ce02 + Y₂O₃, n'implique pas que chacun desdits oxydes soit présent, même si, dans un mode de réalisation, chacun desdits oxydes est présent.

Par « masse volumique absolue » d'une poudre , on entend la masse volumique absolue classiquement calculée à l'aide d'une loi des mélanges, à partir d'une analyse chimique de ladite poudre, en considérant que la totalité des oxydes d'yttrium et de cérium stabilise la zircone, et sans prendre en compte les additifs et les impuretés. La masse volumique absolue de la zircone partiellement stabilisée à Y₂O₃ et Ce02 est calculée selon l'enseignement du document « *Phase transformation and lattice constants of zirconia solid solutions in the system Y₂O₃-CeO₂-ZrO₂ »,* Urabe et Al., Materials Science Forum Vols. 34-36 (1988) pp 147-152.

Par « masse volumique relative » d'une poudre, on entend le rapport égal à la masse volumique apparente divisée par la masse volumique absolue, exprimé en pourcentage.

Par « masse volumique apparente » d'une poudre, on entend le rapport entre la masse de poudre et le volume cumulé des particules de la poudre, incluant donc la porosité fermée localisée à l'intérieur de ces particules.

Le « recouvrement » est le rapport de la surface de la pièce impactée, c'est-à-dire modifiée par l'impact des particules projetées, sur la surface totale vers laquelle la poudre de particules est projetée, c'est-à-dire la surface de la pièce exposée au jet des particules projetées. Le recouvrement est exprimé en pourcentages. Le recouvrement est donc inférieur à 100% tant qu'il existe, au sein de la surface qui croise le jet de particules, des zones non modifiées par les impacts de ces particules.

Le « taux de recouvrement », exprimé en pourcentage, est le rapport du temps de traitement sur le temps de traitement permettant d'obtenir un recouvrement égal à 98%. Ainsi un taux de recouvrement égal à 200% exprime le fait que la durée du traitement est égale à deux fois celle nécessaire pour atteindre un recouvrement égal à 98%.

Un « précurseur » d'un oxyde est un constituant qui se transforme en ledit oxyde lors de la fabrication d'une poudre selon l'invention.

On appelle « taille moyenne » des grains ramassés d'un produit fritté, la dimension mesurée selon une méthode de « Mean Linear Intercept ». Une méthode de mesure de ce type est décrite dans la norme ASTM E1382. La mesure peut être effectuée sur une coupe du produit, comme décrit dans les exemples. L'homme du métier sait augmenter la taille moyenne des grains en augmentant la taille médiane du mélange particulaire à l'étape i') et/ou en augmentant la température de frittage à l'étape ii') et/ou en augmentant la durée de frittage à l'étape vii').

Un « nodule allongé alumineux » est une structure présentant un facteur de forme supérieur ou égal à 2,5 et constituée d'un grain alumineux ou de plusieurs grains alumineux adjacents, c'est-à-dire en contact. L'homme du métier sait augmenter la quantité de nodules allongés alumineux en augmentant la quantité d'additif dans le mélange particulaire à l'étape i') et/ou en augmentant la température de frittage à l'étape ii'), en particulier jusqu'à 1500°C et/ou en augmentant la quantité d'Al₂O₃ dans le mélange particulaire à l'étape i').

Un grain « alumineux » est un grain contenant de l'aluminium et de l'additif, dans lequel Al₂O₃ + additif > 40% (teneur cumulée en additif et en aluminium, les teneurs en aluminium et en additif étant exprimées sous la forme d'oxyde > 40%), en pourcentage massique du grain.

Un « grain » est une particule agglomérée à d'autres particules dans un produit fritté. Par « grains de zircone partiellement stabilisée » et « grains d'alumine », on entend des grains comportant plus de 90% de zircone partiellement stabilisée et d'alumine, respectivement.

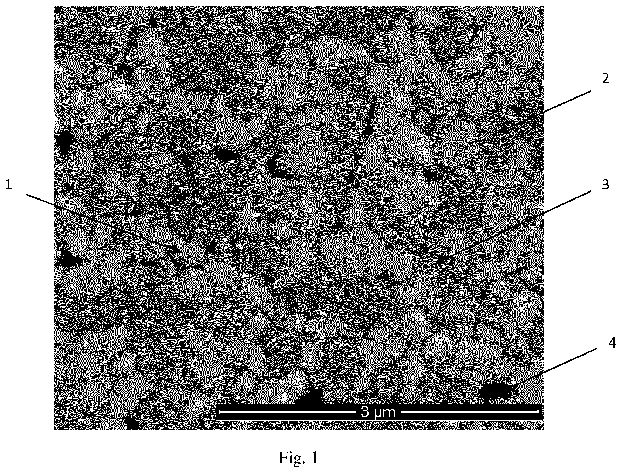

On appelle « facteur de forme d'un grain ou d'un nodule allongé alumineux », noté « F », le rapport entre la plus grande dimension du grain ou du nodule allongé alumineux, ou "longueur", et la plus grande dimension mesurée perpendiculairement à la direction de ladite plus grande dimension, ou "largeur". Ces dimensions sont mesurées dans un plan d'observation d'une coupe polie de la bille, classiquement sur des clichés de microscopie électronique de cette coupe (voir figure 1).

On appelle « longueur moyenne » des nodules allongés alumineux, la moyenne des longueurs des nodules allongés alumineux, lesdites longueurs étant mesurées dans un plan d'observation d'une coupe polie de la bille, classiquement sur des clichés de microscopie électronique de cette coupe.

On appelle « grain ramassé » un grain présentant un facteur de forme inférieur à 2,5.

« Contenir », « comporter » ou « présenter » ne doivent pas être interprétés de manière limitative.

Sauf mention contraire, les pourcentages utilisés pour caractériser une composition se réfèrent toujours à des pourcentages massiques sur la base des oxydes.

### Brève description des figures

D'autres caractéristiques et avantages de l'invention apparaîtront encore à la lecture de la description détaillée qui va suivre et à l'examen du dessin annexé dans lequel la figure 1 représente une photographie d'une coupe polie d'une bille frittée de la poudre de l'exemple 3, utilisable dans le procédé selon l'invention, obtenue après frittage à une température de 1460°C, cette bille ayant subi, après polissage, une attaque thermique à 1360°C pendant 30 minutes pour révéler les joints de grains.

### Description détaillée

### Procédé de fabrication de la poudre

Pour fabriquer une poudre de billes frittées utilisée dans le procédé l'invention, on peut procéder suivant un procédé comportant les étapes suivantes :
i') optionnellement, broyage d'une ou plusieurs poudres de matières premières apportant des constituants des billes à fabriquer et/ou des précurseurs de ces constituants, de préférence par cobroyage, et dosage desdites poudres de matières premières optionnellement broyées, de manière à obtenir un mélange particulaire présentant une taille médiane inférieure à 0,6 µm,
ii') optionnellement, séchage dudit mélange particulaire,
iii') préparation d'une charge de départ à partir dudit mélange particulaire, optionnellement séché, de manière que la poudre obtenue à l'issue de l'étape vii') présente une composition conforme à l'invention,
iv') mise en forme de la charge de départ sous la forme de billes crues, de manière que plus de 95% en masse des particules de la poudre obtenue à l'issue de l'étape vii') soient des billes,
v') optionnellement, lavage,
vi') optionnellement, séchage,
vii') frittage de manière à obtenir une poudre de billes frittées,
viii') optionnellement, sélection granulométrique.

A l'étape i'), les poudres de matières premières peuvent être broyées individuellement ou, de préférence, cobroyées, si leur mélange dans des proportions adaptées pour la fabrication de billes céramiques présentant la composition recherchée ne conduit pas à un mélange particulaire présentant une taille médiane inférieure à 0,6 µm. Ce broyage peut être un broyage humide.

De préférence, un broyage ou un cobroyage est effectué de manière que la taille médiane dudit mélange particulaire soit inférieure à 0,5 µm, de préférence inférieure à 0,4 µm.

De préférence, les poudres utilisées, notamment les poudres de ZrO₂, d'Al₂O₃, de Y₂O₃, de CeO₂, et d'additif présentent chacune une taille médiane inférieure à 5 µm, voire inférieure à 3 µm, inférieure à 1 µm, inférieure à 0,8 µm, inférieure à 0,7 µm, de préférence inférieure à 0,6 µm, de préférence inférieure à 0,5 µm, de préférence inférieure à 0,3 µm, voire inférieure à 0,2 µm. Avantageusement, lorsque que chacune de ces poudres présente une taille médiane inférieure à 0,6 µm, de préférence inférieure à 0,5 µm, de préférence inférieure à 0,4 µm, l'étape i') est optionnelle.

De préférence, la poudre de zircone utilisée présente une aire spécifique, calculée par la méthode BET, supérieure à 5 m²/g, de préférence supérieure à 8 m²/g, de préférence supérieure à 10 m²/g, et inférieure à 30 m²/g. Avantageusement, la température de frittage à l'étape vii') est réduite, et le broyage à l'étape i'), généralement en suspension, en est facilité.

A l'étape ii'), optionnelle, le mélange particulaire est séché, par exemple en étuve ou par atomisation, en particulier s'il a été obtenu par broyage humide. De préférence, la température et/ou la durée de l'étape de séchage sont adaptées de manière à ce que l'humidité résiduelle du mélange particulaire soit inférieure à 2%, voire inférieure à 1,5%.

A l'étape iii'), on prépare, de préférence à température ambiante, une charge de départ adaptée au procédé de mise en forme de l'étape iv'), comme cela est bien connu de l'homme du métier. La charge est adaptée de manière que la composition de la poudre obtenue à l'issue de l'étape vii') soit conforme à l'invention. A cet effet, elle comporte des poudres de ZrO₂, Al₂O₃, CeO₂, et Y₂O₃ et, le cas échéant, une ou plusieurs poudres de CaO, et/ou d'un oxyde de manganèse, et/ou de ZnO, et/ou d'un oxyde de praséodyme, et/ou de SrO, et/ou d'un oxyde de cuivre, et/ou de Nd₂O₃, et/ou de BaO et/ou d'un oxyde de fer.

Ces poudres peuvent également être remplacées, au moins partiellement, par des poudres de précurseurs de ces oxydes, introduits dans des quantités équivalentes.

Les poudres apportant les oxydes ou les précurseurs sont de préférence choisies de manière que la teneur totale en impuretés, c'est-à-dire en éléments non introduits volontairement, soit inférieure à 4%, de préférence inférieure à 3%, de préférence inférieure à 2%, en pourcentage massique sur la base des oxydes.

Dans un mode de réalisation particulier, Y₂O₃ est introduit, au moins en partie, sous la forme d'une zircone partiellement stabilisée à l'oxyde d'yttrium.

Dans un mode de réalisation, Ce02 est introduit, au moins en partie, sous la forme d'une zircone partiellement stabilisée à l'oxyde de cérium, voire stabilisée à l'oxyde de cérium.

De préférence, l'oxyde de manganèse est choisi parmi MnO, Mn₃O₄ et leurs mélanges.

De préférence, l'oxyde de praséodyme est Pr₆O₁₁.

De préférence, l'oxyde de cuivre est CuO.

De préférence, l'oxyde de fer est choisi parmi FeO, Fe₂O₃ et leurs mélanges.

La charge de départ peut comporter, en plus du mélange particulaire, un solvant, de préférence de l'eau, dont la quantité est adaptée à la méthode de mise en forme de l'étape iv'). La charge de départ est alors constituée du mélange particulaire et du solvant.

A l'étape iv'), tout procédé conventionnel de mise en forme connu pour la fabrication de billes frittées peut être mis en œuvre. Parmi ces procédés, on peut citer :
- les procédés de granulation, mettant par exemple en œuvre des granulateurs, des granulateurs à lit fluidisé, ou des disques de granulation,
- les procédés de gélification,
- les procédés de moulage par injection ou extrusion, et
- les procédés de pressage.

La mise en forme peut en particulier résulter d'un procédé de gélification. A cet effet, un solvant, de préférence de l'eau, est ajouté à la charge de départ de manière à réaliser une suspension. La suspension présente de préférence une teneur massique en matière sèche comprise entre 50 et 70%. La suspension peut encore comporter un ou plusieurs des constituants suivants :
- un dispersant, à raison de 0 à 10%, en pourcentage massique sur la base de la matière sèche ;
- un modificateur de tension de surface, à raison de 0 à 3%, en pourcentage massique sur la base de la matière sèche ;
- un agent gélifiant, ou « agent de gélification », à raison de 0 à 2%, en pourcentage massique sur la base de la matière sèche.

Les dispersants, modificateurs de tension de surface et agents gélifiants sont bien connus de l'homme du métier.

Le mélange particulaire est de préférence ajouté dans un mélange d'eau et de dispersants/défloculants, dans un broyeur à boulets. Après agitation, on ajoute de l'eau dans laquelle a été préalablement dissout un agent gélifiant de manière à obtenir une suspension. Dans un procédé de gélification, des gouttes de la suspension décrite ci-dessus sont obtenues par écoulement de la suspension à travers un orifice calibré. Les gouttes sortant de l'orifice tombent dans un bain d'une solution de gélification (électrolyte adapté pour réagir avec l'agent gélifiant) où elles durcissent après avoir recouvré une forme sensiblement sphérique. A l'étape v'), optionnelle, les billes crues obtenues lors de l'étape précédente sont lavées, par exemple à l'eau.

A l'étape vi'), optionnelle, les billes crues, éventuellement lavées, sont séchées, par exemple à l'étuve.

A l'étape vii'), les billes crues, éventuellement lavées et/ou séchées, sont frittées. De préférence, le frittage s'effectue sous air, de préférence dans un four électrique, de préférence à pression atmosphérique.

De préférence, la durée de frittage est supérieure à 1 heure, supérieure à 2 heures et/ou inférieure à 10 heures, inférieure à 7 heures, ou inférieure à 5 heures. De préférence, la durée de frittage est comprise entre 2 et 5 heures.

Le frittage à l'étape vii') est effectué à une température supérieure à 1300°C et de préférence inférieure à 1600°C, de préférence inférieure à 1550°C, de préférence inférieure à 1500°C. Si, avant frittage, les billes ne contiennent pas de composé de Mn, Zn, Cu, Pr, Nd, Sr, La, Ba ou Fe, c'est-à-dire si l'additif dans les billes de la poudre est CaO, la température de frittage est supérieure à 1400°C, de préférence supérieure à 1425°C.

Si la teneur molaire en Ce02 des billes de la poudre obtenues en fin d'étape vii') est comprise entre 10% et 11%, la température de frittage est supérieure à 1400°C.

La température de frittage est de préférence d'autant plus élevée que la quantité d'Al₂O₃ est importante.

A l'étape vii'), optionnelle, la poudre obtenue subit un tri granulométrique, par exemple par tamisage et/ou par séparation à air, configuré pour obtenir une distribution granulométrique adaptée au procédé de grenaillage envisagé.

### Poudre

De préférence, une poudre de billes utilisée dans le procédé selon l'invention comporte, en pourcentage massique, plus de 96%, de préférence plus de 97%, de préférence plus de 98%, de préférence plus de 99%, de préférence sensiblement 100% de billes.

De préférence, plus de 80%, de préférence plus de 85%, de préférence plus de 90%, de préférence plus de 95%, de préférence plus de 97% en masse des billes de la poudre présentent chacune une sphéricité supérieure à 0,80, de préférence supérieure à 0,85, de préférence supérieure à 0,90, de préférence supérieure à 0,92, de préférence supérieure à 0,94, de préférence supérieure à 0,95.

La sphéricité médiane de la poudre de billes est de préférence supérieure à 0,80, de préférence supérieure à 0,85, de préférence supérieure à 0,90, de préférence supérieure à 0,92, de préférence supérieure à 0,94, de préférence supérieure à 0,95, de préférence supérieure à 0,97, de préférence supérieure à 0,98.

La poudre de billes présente de préférence une taille maximale inférieure à 2 mm, de préférence inférieure à 1,8 mm, de préférence inférieure à 1,5 mm et de préférence une taille médiane supérieure à 40 µm et inférieure à 1200 µm.

Dans un mode de réalisation, la poudre de billes présente une taille médiane D₅₀ supérieure à 80 µm, de préférence supérieure à 100 µm, de préférence supérieure à 150 µm, de préférence supérieure à 200 µm, de préférence supérieure à 400 µm et/ou inférieure à 1000 µm, de préférence inférieure à 800 µm. Ce mode de réalisation est particulièrement bien adapté pour un grenaillage de précontrainte.

Dans un mode de réalisation, la poudre de billes présente une taille médiane D₅₀ inférieure à 200 µm, de préférence inférieure à 150 µm. Ce mode de réalisation est particulièrement bien adapté pour un grenaillage visant à modifier l'aspect de surface d'une pièce (en anglais *« cosmetic finishing »*).

La poudre présente de préférence une masse volumique relative supérieure à 96%, de préférence supérieure à 97%, de préférence supérieure à 98%, de préférence supérieure à 99%.

La poudre présente de préférence une masse volumique apparente supérieure à 5,0 g/cm³, de préférence supérieure à 5,1 g/cm³, et/ou inférieure à 6,0 g/cm³, de préférence inférieure à 5,9 g/cm³, de préférence inférieure à 5,8 g/cm³. La différence de composition des particules par rapport à celles décrites dans EP 2 231 363 permet avantageusement, avec des masses volumiques apparentes supérieures à 5,0 g/cm³, d'obtenir des précontraintes de compression élevées dans la couche superficielle de la pièce traitée pour des profondeurs supérieures ou égale à 150 µm.

Les billes présentent de préférence une dureté supérieure à 900 HV_{(0,5/15)}, de préférence supérieure à 1000 HV_{(0,5/15)}, de préférence supérieure à 1100 HV_{(0,5/15)}, et/ou de préférence inférieure à 1400 HV_{(0,5/15)}.

Dans un mode de réalisation, les billes de la poudre présentent une surface polie. Avantageusement, la pièce traitée présente un meilleur comportement en fatigue vis-à-vis d'une sollicitation cyclique.

De préférence, la poudre est constituée d'oxydes pour plus de 95%, de préférence pour plus de 97%, de préférence pour plus de 99% de sa masse.

De préférence, chaque bille de la poudre est constituée d'oxydes pour plus de 95%, de préférence pour plus de 97%, de préférence pour plus de 99% de sa masse.

La présence, dans la charge de départ, de CaO, et/ou d'un oxyde de manganèse, et/ou de ZnO, et/ou d'un oxyde de praséodyme, et/ou de SrO, et/ou d'un oxyde de cuivre, et/ou de Nd₂O₃, et/ou de BaO, et/ou d'un oxyde de fer et/ou de précurseurs de ces oxydes permet avantageusement d'augmenter la quantité de nodules allongés alumineux contenus dans les billes frittées.

Les inventeurs ont relevé la présence d'une microstructure particulière dans les produits frittés utilisés dans le procédé selon l'invention.

Comme représentée sur la figure 1, ladite microstructure se caractérise par la présence de grains ramassés de zircone partiellement stabilisée 1, de grains ramassés d'alumine 2, de nodules allongés alumineux 3, qui peuvent se présenter sous la forme de baguettes sensiblement rectilignes, ainsi que de pores 4. La longueur moyenne des nodules allongés alumineux est typiquement supérieure à 1 µm et/ou inférieure à 20 µm. Les grains ramassés présentent typiquement une taille moyenne inférieure à 3 µm et/ou supérieure à 0,1 µm. Typiquement, plus de 90%, plus de 95%, voire plus de 98% ou 100% de la masse de la zircone se présente sous la forme de grains ramassés de zircone.

Ce02 et Y₂O₃ servent à stabiliser la zircone mais peuvent aussi être présents en dehors de celle-ci.

Les inventeurs ont constaté que les nodules allongés alumineux sont sensiblement constitués, en fonction de l'additif, d'une phase de type hibonite et/ou d'une phase de type magnéto-plombite.

Une poudre utilisée dans le procédé selon l'invention peut en particulier présenter une ou plusieurs des caractéristiques de composition suivantes :
- la poudre présente une teneur en Al₂O₃ supérieure à 5%, de préférence supérieure à 8%, de préférence supérieure à 10% et/ou inférieure à 55%, de préférence inférieure à 50%, de préférence inférieure à 40%, de préférence inférieure à 35%, en pourcentage massique sur la base des oxydes de la poudre ;
- la poudre présente une teneur en Y₂O₃ inférieure à 1,9%, de préférence inférieure à 1,7%, de préférence inférieure 1,5% et/ou de préférence supérieure à 0,7%, voire supérieure à 0,8%, en pourcentage molaire sur la base de la somme de ZrO₂, Ce02 et Y₂O₃ présents dans la poudre ;
- la poudre présente une teneur en Ce02 inférieure à 10,5%, de préférence inférieure à 10,0%, de préférence inférieure 9,5% et/ou de préférence supérieure à 3,0%, en pourcentage molaire sur la base de la somme de ZrO₂, Ce02 et Y₂O₃ présents dans la poudre ;
- la poudre présente un additif choisi parmi CaO, les oxydes de manganèse, ZnO, SrO, BaO et leurs mélanges, de préférence parmi CaO, les oxydes de manganèse, et leurs mélanges ;
- la poudre présente une teneur en additif supérieure à 0,3%, voire supérieure à 0,4%, voire supérieure à 0,5% et/ou inférieure à 5%, voire inférieure à 4%, voire inférieure à 3%, voire inférieure à 2,5%, voire inférieure à 2%, voire inférieure à 1,5%, voire inférieure à 1%, en pourcentage en masse sur la base des oxydes de la poudre ;
- l'additif de la poudre comporte CaO, la teneur en CaO étant supérieure à 0,2%, voire supérieure à 0,3%, voire supérieure à 0,4%, voire supérieure à 0,5%, et/ou inférieure à 1,5%, de préférence inférieure à 1%, voire inférieure à 0,8%, inférieure à 0,6%, en pourcentage en masse sur la base des oxydes de la poudre ;
- l'additif de la poudre comporte
   - CaO, la teneur en CaO étant supérieure à 0,2%, voire supérieure à 0,3%, voire supérieure à 0,4%, voire supérieure à 0,5%, et/ou inférieure à 1,5%, de préférence inférieure à 1%, voire inférieure à 0,8%, inférieure à 0,6%, en pourcentage en masse sur la base des oxydes de la poudre, et
   - un deuxième composé d'additif choisi parmi les oxydes de manganèse, ZnO, SrO, BaO et leurs mélanges, en particulier les oxydes de manganèse, la teneur dudit deuxième composé d'additif étant de préférence supérieure à 0,1%, de préférence supérieure à 0,2% et/ou inférieure à 4,0%, de préférence inférieure à 3,5%, de préférence inférieure à 3,0%, de préférence inférieure à 2,5%, de préférence inférieure à 2,0%, de préférence inférieure à 1,5%, voire inférieure à 1,0%, voire inférieure à 0,8%, voire inférieure à 0,6%, en pourcentage en masse sur la base des oxydes de la poudre ;
- dans un mode de réalisation préféré, l'additif de la poudre est un mélange d'un ou plusieurs oxyde(s) de manganèse et de CaO, la teneur en oxyde(s) de manganèse exprimée sous la forme MnO étant de préférence supérieure à 0,1%, de préférence supérieure à 0,2%, et/ou de préférence inférieure à 4%, de préférence inférieure à 3,5%, de préférence inférieure à 3%, de préférence inférieure à 2,5%, de préférence inférieure à 2%, de préférence inférieure à 1,5%, voire inférieure à 1%, voire inférieure à 0,8%, voire inférieure à 0,6%, et la teneur en CaO étant de préférence supérieure à 0,2%, voire supérieure à 0,3%, voire supérieure à 0,4%, voire supérieure à 0,5% et/ou inférieure à 4%, de préférence inférieure à 3,5%, de préférence inférieure à 3,0%, de préférence inférieure à 2,5%, de préférence inférieure à 2,0%, de préférence inférieure à 1,5%, voire inférieure à 1,0%, voire inférieure à 0,8%, voire inférieure à 0,6%, en pourcentage en masse sur la base des oxydes de la poudre ;
- la poudre présente une teneur en « éléments autres que ZrO₂, CeO₂, Y₂O₃, Al₂O₃, CaO, les oxydes de manganèse, ZnO, les oxydes de praséodyme, SrO, les oxydes de cuivre, Nd₂O₃, BaO, et les oxydes de fer » inférieure à 4,0%, de préférence inférieure à 3,0%, de préférence inférieure à 2,0%, de préférence inférieure à 1,0%, de préférence inférieure à 0,8%, de préférence inférieure à 0,5%, voire inférieure à 0,3%, en pourcentage massique sur la base des oxydes de la poudre. Dans un mode de réalisation, les « éléments autres que ZrO₂, CeO₂, Y₂O₃, Al₂O₃, CaO, les oxydes de manganèse, ZnO, les oxydes de praséodyme, SrO, les oxydes de cuivre, Nd₂O₃, BaO, et les oxydes de fer » sont des impuretés.
- de préférence, plus de 80%, de préférence plus de 85%, de préférence plus de 90%, de préférence plus de 95%, voire plus de 97%, voire plus de 99%, en nombre des billes de la poudre selon l'invention présentent des nodules allongés alumineux ;
- de préférence, la microstructure des billes frittées de la poudre utilisée dans le procédé selon l'invention est telle que :
   - la taille moyenne des grains ramassés est inférieure à 3 µm, de préférence inférieure à 2,5 µm, de préférence inférieure à 2 µm, voire inférieure à 1,5 µm, voire inférieure à 1 µm, voire inférieure à 0,8 µm, et de préférence supérieure à 0,1 µm, voire supérieure à 0,2 µm, et
   - la longueur moyenne des nodules allongés alumineux est inférieure à 20 µm ; - dans un mode de réalisation préféré, plus de 95%, de préférence plus de 97%, de préférence plus de 99% en nombre des grains ramassés sont des grains de zircone partiellement stabilisée et/ou des grains constitués pour plus de 40% de leur masse d'Al₂O₃ ;
   - plus de 30%, de préférence plus de 50%, de préférence plus de 60%, de préférence plus de 70%, de préférence plus de 80% en nombre des nodules allongés alumineux, présentent un facteur de forme supérieur ou égal à 3, voire supérieur ou égal à 4 ;
   - plus de 30%, plus de 40%, plus de 60%, plus de 80%, plus de 90% en nombre des nodules allongés alumineux, présentent une forme générale rectiligne.

De préférence, la teneur en SiO₂ est inférieure à 4%, de préférence inférieure à 3%, de préférence inférieure à 2%, de préférence inférieure à 1,5%, de préférence inférieure à 1%, voire inférieure à 0,5%, en pourcentage massique sur la base des oxydes. Avantageusement, la résistance à l'écrasement en est améliorée.

Dans un premier mode principal de réalisation préféré, la poudre présente une ou plusieurs des caractéristiques supplémentaires optionnelles suivantes :
- la teneur molaire en Ce02 est inférieure à 10,5%, de préférence inférieure à 10,0%, de préférence inférieure 9,5%, et/ou de préférence supérieure à 3,0%, de préférence supérieure à 4,0%, de préférence supérieure à 6,0%, de préférence supérieure à 7,0%, de préférence supérieure à 7,5%, de préférence supérieure à 8,0%, voire supérieure à 8,5%, en pourcentage molaire sur la base de la somme de ZrO₂, Ce02 et Y₂O₃ présents dans la poudre ;
- la teneur molaire en Y₂O₃ est inférieure à 1,9%, de préférence inférieure à 1,7%, de préférence inférieure à 1,5%, de préférence inférieure à 1,2% et/ou supérieure à 0,7%, voire supérieure à 0,8%, en pourcentage molaire sur la base de la somme de ZrO₂, Ce02 et Y₂O₃ présents dans la poudre ;
- dans un mode de réalisation particulier, ladite teneur molaire en Ce02 est comprise entre 8,5% et 9,5% et ladite teneur molaire en Y₂O₃ est comprise entre 0,8% et 1,2%, en pourcentages molaires sur la base de la somme de ZrO₂, Ce02 et Y₂O₃ présents dans la poudre ;
- la teneur en Al₂O₃ est supérieure à 5%, de préférence supérieure à 8%, de préférence supérieure à 10%, de préférence supérieure à 15%, de préférence supérieure à 20% et/ou inférieure à 45%, de préférence à 40%, de préférence à 35%, en pourcentage massique sur la base des oxydes de la poudre ;
- de préférence, la teneur en Si02 est inférieure à 1,5%, inférieure à 1,0%, de préférence inférieure à 0,7%, de préférence inférieure à 0,5%, en pourcentage massique sur la base des oxydes de la poudre ;
- les billes de la poudre sont obtenues par frittage à une température supérieure ou égale à 1320°C, supérieure à 1400°C, supérieure à 1425°C et/ou inférieure à 1550°C ;
- de préférence, la taille moyenne de l'ensemble des grains de zircone partiellement stabilisée et des grains d'alumine des billes de la poudre est inférieure à 3 µm, de préférence inférieure à 2,5 µm, voire inférieure à 2 µm, voire inférieure à 1,5 µm, voire inférieure à 1 µm, voire inférieure à 0,8 µm, et de préférence supérieure à 0,1 µm ;
- plus de 80%, plus de 90%, voire sensiblement 100% en nombre des nodules allongés alumineux des billes de la poudre présentent une forme générale rectiligne ;
- les nodules allongés alumineux des billes de la poudre comportent l'élément Cérium (Ce).

De préférence, dans ce premier principal mode de réalisation préféré, les billes présentent les caractéristiques suivantes :
- la teneur molaire en Ce02 est inférieure à 10,5%, de préférence inférieure à 10,0%, de préférence inférieure 9,5%, et/ou de préférence supérieure à 3,0%, de préférence supérieure à 4,0%, de préférence supérieure à 6,0%, de préférence supérieure à 7,0%, de préférence supérieure à 7,5%, de préférence supérieure à 8,0%, voire supérieure à 8,5%, en pourcentage molaire sur la base de la somme de ZrO₂, Ce02 et Y₂O₃ présents dans la poudre, et
- la teneur molaire en Y₂O₃ est inférieure à 1,9%, de préférence inférieure à 1,7%, de préférence inférieure à 1,5%, de préférence inférieure à 1,2% et/ou supérieure à 0,7%, voire supérieure à 0,8%, en pourcentage molaire sur la base de la somme de ZrO₂, Ce02 et Y₂O₃ présents dans la poudre, et
- la teneur en Al₂O₃ est supérieure à 5%, de préférence supérieure à 8%, de préférence supérieure à 10%, de préférence supérieure à 15%, de préférence supérieure à 20% et/ou inférieure à 45%, de préférence à 40%, de préférence à 35%, en pourcentage massique sur la base des oxydes de la poudre, et
- la teneur en Si02 est inférieure à 1,5%, inférieure à 1,0%, de préférence inférieure à 0,7%, de préférence inférieure à 0,5%, en pourcentage massique sur la base des oxydes de la poudre, et
- l'additif est un mélange d'un ou plusieurs oxyde(s) de manganèse et de CaO, la teneur en oxyde(s) de manganèse exprimée sous la forme MnO étant supérieure à 0,1%, de préférence supérieure à 0,2%, et/ou de préférence inférieure à 4%, de préférence inférieure à 3,5%, de préférence inférieure à 3%, de préférence inférieure à 2,5%, de préférence inférieure à 2%, de préférence inférieure à 1,5%, voire inférieure à 1%, voire inférieure à 0,8%, voire inférieure à 0,6%, et la teneur en CaO étant de préférence supérieure à 0,2%, voire supérieure à 0,3%, voire supérieure à 0,4%, voire supérieure à 0,5% et/ou inférieure à 4%, de préférence inférieure à 3,5%, de préférence inférieure à 3,0%, de préférence inférieure à 2,5%, de préférence inférieure à 2,0%, de préférence inférieure à 1,5%, voire inférieure à 1,0%, voire inférieure à 0,8%, voire inférieure à 0,6%, en pourcentage en masse sur la base des oxydes de la poudre, et
- la teneur en éléments autres que ZrO₂, CeO₂, Y₂O₃, Al₂O₃, CaO, les oxydes de manganèse, ZnO, les oxydes de praséodyme, SrO, les oxydes de cuivre, Nd₂O₃, BaO, et les oxydes de fer est inférieure à 4,0%, de préférence inférieure à 3,0%, de préférence inférieure à 2,0%, de préférence inférieure à 1,0%, de préférence inférieure à 0,8%, de préférence inférieure à 0,5%, voire inférieure à 0,3%, en pourcentage massique sur la base des oxydes de la poudre.

Dans un deuxième mode principal de réalisation préféré, la poudre présente une ou plusieurs des caractéristiques supplémentaires optionnelles suivantes :
- la taille moyenne des grains des billes de la poudre présentant un facteur de forme inférieur à 2,5 µm, est inférieure à 1,5 µm, de préférence inférieure à 1 µm, de préférence inférieure à 0,5 µm et/ou de préférence supérieure à 0,1 µm, de préférence supérieure à 0,2 µm ;
- dans un mode de réalisation préféré, plus de 95%, de préférence plus de 97%, de préférence plus de 99% en nombre des grains des billes de la poudre présentant un facteur de forme inférieur à 2,5 sont des grains de zircone partiellement stabilisée et/ou des grains constitués pour plus de 40% de leur masse d'Al₂O₃ ;
- la longueur moyenne des nodules allongés alumineux des billes de la poudre est inférieure à 18 µm, de préférence inférieure à 15 µm, voire inférieure à 10 µm et/ou supérieure à 1 µm, de préférence supérieure à 2 µm, de préférence supérieure à 5 µm ;
- plus de 50%, de préférence plus de 60%, de préférence plus de 70%, de préférence plus de 80% en nombre des nodules allongés alumineux des billes de la poudre présentent un facteur de forme supérieur ou égal à 3, voire supérieur ou égal à 4 ;plus de 30%, plus de 40%, plus de 60%, plus de 80%, plus de 90% en nombre des nodules allongés alumineux des billes de la poudre présentent une forme générale rectiligne ;
- la teneur molaire en Y₂O₃ est de préférence inférieure à 1,9%, de préférence inférieure à 1,7%, de préférence inférieure à 1,5%, et/ou de préférence supérieure à 0,6%, de préférence supérieure à 0,7%, de préférence supérieure à 0,8%, de préférence supérieure à 1,0%, en pourcentage molaire sur la base de la somme de ZrO₂, Ce02 et Y₂O₃ présents dans la poudre ;
- la teneur molaire en Ce02 est de préférence inférieure à 6,5%, de préférence inférieure à 6,0%, de préférence inférieure à 5,5%, de préférence inférieure à 5,0%, de préférence inférieure à 4,5%, de préférence inférieure à 4,2%, de préférence inférieure à 4,0%, de préférence inférieure à 3,8%, et/ou supérieure à 3,0%, en pourcentage molaire sur la base de la somme de ZrO₂, Ce02 et Y₂O₃ présents dans la poudre ;
- la teneur en Al₂O₃ est de préférence inférieure à 19%, de préférence inférieure à 16%, et/ou de préférence supérieure à 5%, de préférence supérieure à 7%, de préférence supérieure à 9%, de préférence supérieure à 11%, de préférence supérieure à 12%, de préférence supérieure à 13%, en pourcentage massique sur la base des oxydes ;

De préférence, dans ce deuxième mode principal de réalisation préféré, les billes présentent les caractéristiques suivantes :
- la teneur molaire en Y₂O₃ est de préférence inférieure à 1,9%, de préférence inférieure à 1,7%, de préférence inférieure à 1,5%, et/ou de préférence supérieure à 0,6%, de préférence supérieure à 0,7%, de préférence supérieure à 0,8%, de préférence supérieure à 1,0%, en pourcentage molaire sur la base de la somme de ZrO₂, Ce02 et Y₂O₃ présents dans la poudre, et
- la teneur molaire en Ce02 est de préférence inférieure à 6,5%, de préférence inférieure à 6%, de préférence inférieure à 5,5%, de préférence inférieure à 5,0%, de préférence inférieure à 4,5%, de préférence inférieure à 4,2%, de préférence inférieure à 4,0%, de préférence inférieure à 3,8%, et/ou supérieure à 3,0%, en pourcentage molaire sur la base de la somme de ZrO₂, Ce02 et Y₂O₃ présents dans la poudre, et

- la teneur en Al₂O₃ est supérieure à 5%, de préférence supérieure à 7%, de préférence supérieure à 9%, de préférence supérieure à 11%, de préférence supérieure à 12%, de préférence supérieure à 13%, et inférieure à 19%, de préférence inférieure à 16%, en pourcentage en masse sur la base des oxydes de la poudre, et
- l'additif est un mélange d'un ou plusieurs oxyde(s) de manganèse et de CaO, la teneur en oxyde(s) de manganèse exprimée sous la forme MnO étant supérieure à 0,1%, de préférence supérieure à 0,2%, et/ou de préférence inférieure à 4%, de préférence inférieure à 3,5%, de préférence inférieure à 3%, de préférence inférieure à 2,5%, de préférence inférieure à 2%, de préférence inférieure à 1,5%, voire inférieure à 1%, voire inférieure à 0,8%, voire inférieure à 0,6%, et la teneur en CaO étant de préférence supérieure à 0,2%, voire supérieure à 0,3%, voire supérieure à 0,4%, voire supérieure à 0,5% et/ou inférieure à 4%, de préférence inférieure à 3,5%, de préférence inférieure à 3,0%, de préférence inférieure à 2,5%, de préférence inférieure à 2,0%, de préférence inférieure à 1,5%, voire inférieure à 1,0%, voire inférieure à 0,8%, voire inférieure à 0,6%, en pourcentage en masse sur la base des oxydes de la poudre, et
- la teneur en éléments autres que ZrO₂, CeO₂, Y₂O₃, Al₂O₃, CaO, les oxydes de manganèse, ZnO, les oxydes de praséodyme, SrO, les oxydes de cuivre, Nd₂O₃, BaO, et les oxydes de fer est inférieure à 4,0%, de préférence inférieure à 3,0%, de préférence inférieure à 2,0%, de préférence inférieure à 1,0%, de préférence inférieure à 0,8%, de préférence inférieure à 0,5%, voire inférieure à 0,3%, en pourcentage massique sur la base des oxydes de la poudre.

Dans un mode de réalisation préféré, plus de 80%, de préférence plus de 85%, de préférence plus de 90%, de préférence plus de 95% en masse des billes de la poudre présentent chacune une ou plusieurs des caractéristiques décrites précédemment.

### Procédé de grenaillage

Toutes les techniques connues de grenaillage par projection peuvent être mises en œuvre pour projeter une poudre selon la revendication 1.

De préférence, on ne projette pas de particules métalliques, ni avant, ni après la projection de la poudre selon la revendication 1.

Dans un mode de réalisation, seule une poudre selon la revendication 1, et présentant éventuellement une ou plusieurs des caractéristiques optionnelles susmentionnées, en particulier celles des deux modes principaux de réalisation, est projetée, de préférence plusieurs fois.

De préférence, la projection est réalisée au moyen d'une grenailleuse à air comprimé, de préférence à effet venturi ou à pression directe, de préférence à pression directe, ou au moyen d'une grenailleuse à turbine(s).

De préférence, les particules sont projetées à une vitesse supérieure à 40 m/s, de préférence supérieure à 48 m/s, voire supérieure à 50 m/s, voire supérieure à 55 m/s. Classiquement, cette vitesse est mesurée à la sortie de la buse

De préférence encore, les particules sont projetées suivant une direction formant un angle de projection avec la surface à traiter, l'angle de projection, c'est-à-dire l'angle entre la surface à traiter et ladite direction (l'axe du jet des billes projetées), étant de préférence supérieur à 45°, de préférence supérieur à 50°.

Les particules sont projetées en traversant une buse disposée à une distance, dite « distance de projection », de la surface à traiter, ladite distance de projection étant de préférence supérieure à 5 cm, de préférence supérieure à 10 cm et/ou de préférence inférieure à 30 cm, de préférence inférieure à 25 cm.

La buse de projection de la grenailleuse présente de préférence un diamètre supérieur à 6 mm, de préférence supérieur à 7 mm, et/ou inférieur à 15 mm, de préférence inférieur à 12 mm.

Les particules sont projetées sur la surface en étant portées par un fluide, de préférence l'air, dont la surpression (pression supplémentaire au-delà de la pression atmosphérique) est de préférence supérieure à 0,5 bar, de préférence supérieure à 1 bar, de préférence supérieure à 2 bar et/ou de préférence inférieure à 7 bar, de préférence inférieure à 6 bar.

De préférence, le procédé comporte une aspiration, de préférence lors de l'étape de projection.

Les particules sont projetées avec un taux de recouvrement de préférence supérieur à 100%, de préférence supérieur à 120%, voire supérieur à 150% et/ou de préférence inférieur à 300%, de préférence inférieur à 250%, de préférence inférieur à 200%.

La surface à traiter peut subir, avant traitement par projection, un prétraitement, par exemple un polissage, par exemple de type miroir. Dans un mode de réalisation, la surface à traiter ne comporte pas de revêtement. Dans un mode de réalisation, la surface à traiter est en un matériau métallique, de préférence sous la forme d'un métal ou d'un alliage métallique, de préférence en acier, en aluminium ou en titane.

La surface à traiter peut être notamment une surface d'une pièce automobile, et notamment être choisie parmi un pignon, un arbre de transmission, un ressort, une barre de torsion, une bielle, et un vilebrequin.

La surface à traiter peut être notamment une surface d'une pièce d'un engin aéronautique, et notamment être choisie parmi une aube de turbine, un train d'atterrissage, un pignon, un arbre de transmission, un ressort, une barre de torsion, une bielle, et un vilebrequin.

Dans un mode de réalisation, la surface à traiter est une surface d'une pièce choisie dans le groupe formé par un bijou, une montre, un bracelet, un collier, une bague, une broche, une épingle de cravate, un sac à main, un meuble, un ustensile ménager, une poignée, un bouton, un placage, une partie visible d'un équipement de bien de consommation, une partie de monture de lunettes, un article de vaisselle et un cadre.

### Exemples

Les exemples non limitatifs suivants sont donnés dans le but d'illustrer l'invention.

### Protocoles de mesure

Pour déterminer la sphéricité d'une bille, les plus petit et plus grand diamètres de Ferret sont mesurés sur un Camsizer XT commercialisé par la société Horiba.

La masse volumique apparente d'une poudre a été mesurée à l'aide d'un pycnomètre à hélium automatique Accupyc 1330.

La microdureté a été mesurée à l'aide d'un micro-duromètre Vickers Zwick 3212. Les valeurs sont obtenues à partir d'indentations Vickers à une charge 0,5 kg, ladite charge étant appliquée pendant un temps égal à 15 secondes (HV_{(0,5/15)}).

L'analyse chimique des poudres a été déterminée par fluorescence aux rayons X.

L'analyse granulométrique a été réalisée à l'aide d'un granulomètre laser Camsizer XT commercialisé par la société Horiba.

Pour les poudres de billes des exemples 2 à 4, le facteur de forme des nodules allongés alumineux et des grains ramassés, ainsi que la longueur moyenne des nodules allongés alumineux sont mesurés sur des images obtenues par microscopie électronique à balayage en électrons rétrodiffusés, de sections de billes frittées, lesdites sections ayant préalablement été polies jusqu'à obtention d'une qualité miroir puis attaquées thermiquement pour révéler les joints de grains, dans un cycle présentant une vitesse de montée en température égale à 100°C/h, jusqu'à une température de palier égale à 1360°C, maintenue pendant 30 minutes, et une descente en température en refroidissement naturel. Le grossissement utilisé pour la prise des images est choisi de façon à visualiser entre 2 et 4 nodules allongés alumineux sur une image. 10 billes ont été aléatoirement prélevées et 5 images par bille ont été réalisées.

La taille moyenne des grains ramassés des billes frittées de la poudre a été mesurée par la méthode de « Mean Linear Intercept ». Une méthode de ce type est décrite dans la norme ASTM E1382. Suivant cette norme, on trace des lignes d'analyse sur des images des billes, puis, le long de chaque ligne d'analyse, on mesure les longueurs, dites « intercepts », entre deux joints de grains ramassés consécutifs coupant ladite ligne d'analyse. Les lignes d'analyse sont déterminées de manière à ne pas couper de nodule allongé alumineux.

On détermine ensuite la longueur moyenne « l' » des intercepts « I ».

La taille moyenne « d » des grains ramassés des billes frittées de la poudre est donnée par la relation : d =1,56.1'. Cette formule est issue de la formule (13) de « Average Grain Size in Polycrystalline Ceramics » M. I. Mendelson, J. Am. Cerm. Soc. Vol. 52, No.8, pp443-446.

### Poudres testées

La poudre de l'exemple 1, hors invention, est une poudre de billes obtenues par électro-fusion, dont les particules ont été tamisées de manière à récupérer les billes passant à travers un tamis de maille carrée d'ouverture égale à 850 µm et ne passant pas à travers un tamis de maille carrée d'ouverture égale à 600 µm, ledit tamisage étant effectué sur une tamiseuse AS 200 commercialisée par la société Retsch.

La poudre de l'exemple 2, utilisée dans le procédé selon l'invention, est une poudre de billes, dont les particules ont été tamisées de manière à récupérer les particules passant à travers un tamis de maille carrée d'ouverture égale à 850 µm et ne passant pas à travers un tamis de maille carrée d'ouverture égale à 600 µm, ledit tamisage étant effectué sur une tamiseuse AS 200 commercialisée par la société Retsch.

Cette poudre a été fabriquée à partir d'une source de zircone (aire spécifique de l'ordre de 8 m²/g ; taille médiane < 5 µm), d'une source de Ce02 (taille médiane < 10 µm), d'une source de Y₂O₃ (taille médiane <20 µm), d'une source d'alumine (taille médiane < 5 µm), d'une source d'oxydes de manganèse, principalement sous la forme Mn₃O₄ (D₉₀ inférieur à 44 µm) et contenant également MnO. La pureté des sources de zircone et de Ce02 était supérieure à 99%. La pureté de la source d'oxydes de manganèse, exprimée sous la forme MnO, était supérieure à 88%. Ces poudres ont été mélangées puis cobroyées en milieu humide jusqu'à obtention d'un mélange présentant une granulométrie fine (taille médiane < 0,3 µm). Le mélange a ensuite été séché.

Une suspension aqueuse comportant, en pourcentages en poids de la matière sèche, 7,5% d'un dispersant de type acide polyacrylique, 1% d'un défloculant de type ester d'acide carbonique (stabilisant de la viscosité), et 1% d'un agent gélifiant, à savoir un polysaccharide de la famille des alginates, a ensuite été préparée à partir de ce mélange.

Un broyeur à boulets a été utilisé pour cette préparation de manière à obtenir une bonne homogénéité de la suspension : Une solution contenant l'agent gélifiant a d'abord été formée. Successivement on a ajouté dans de l'eau, le mélange séché issu du cobroyage, et le dispersant. La solution contenant l'agent gélifiant a ensuite été ajoutée. Le mélange ainsi obtenu a été agité pendant 8 heures. Puis le défloculant a été ajouté et le mélange a été agité pendant 0,5 heure. Après contrôle de la taille des particules (taille médiane inférieure à 0,3 µm), de l'eau a été ajoutée en une quantité déterminée pour obtenir une suspension aqueuse à 61% en matière sèche et une viscosité, mesurée au viscosimètre Brookfield, inférieure à 8500 centipoises. Le pH de la suspension était alors d'environ 9.

La suspension a été forcée à travers un trou calibré et à un débit permettant d'obtenir après frittage des billes comprise entre environ 0,6 mm et 0,85 mm dans le cadre de cet exemple. Les gouttes de suspension tombaient dans un bain de gélification à base d'un électrolyte, sel de cation divalent ou trivalent, réactif avec l'agent gélifiant. Les billes crues ont été collectées, lavées pour éliminer l'excédent de réactifs, puis séchées à 90°C pour éliminer l'humidité. Les billes ont ensuite été transférées dans un four de frittage où elles ont été portées, à une vitesse de 100°C/h, jusqu'à une température de frittage égale à 1460°C. A la fin d'un palier de 3 heures à la température de frittage, la descente en température a été effectuée par refroidissement naturel.

Les poudres des exemples 3 et 4, utilisées dans le procédé selon l'invention, sont des poudres de billes, dont les particules ont été tamisées de manière à récupérer les particules passant à travers un tamis de maille carrée d'ouverture égale à 850 µm et ne passant pas à travers un tamis de maille carrée d'ouverture égale à 600 µm, ledit tamisage étant effectué sur une tamiseuse AS 200 commercialisée par la société Retsch.

Les poudres de billes des exemples 3 et 4 ont été fabriquées selon le même procédé que celui utilisé pour la poudre de billes de l'exemple 2, les quantités de poudres de zircone, de CeO₂, d'Y₂O₃, d'oxydes de manganèse et d'alumine dans la charge de départ étant adaptées pour obtenir l'analyse chimique décrite dans le tableau 1.

Les poudres des exemples 1 à 4 présentent les caractéristiques indiquées dans le tableau 1 suivant.

**(^{∗}) : hors invention Tableau 1**

| | **Exemples** | 1 (^{∗}) | 2 | 3 | 4 |
|---|---|---|---|---|---|
| Analyse chimique (en % en masse sur la base des oxydes) | ZrO₂ | 63 | 63 | 77 | 49,9 |
| | SiO₂ | 7,6 | 0,2 | 0,05 | 0,05 |
| | Al₂O₃ | 5 | 24,5 | 14,8 | 40,2 |
| | Y₂O₃ | 3,8 | 1,3 | 1,75 | 1,11 |
| | CeO₂ | 19,7 | 8,6 | 4,36 | 6,79 |
| | Oxyde de manganèse exprimé en MnO | < 0,02 | 0,50 | 0,40 | 0,50 |
| | CaO | < 0,02 | 0,42 | 0,51 | 0,46 |
| | impuretés | 0,87 | 1,48 | 1,13 | 0,99 |
| Teneur molaire, sur la base de la somme ZrO₂+Y₂O₃+CeO₂ (% molaire) | ZrO₂ | 79,6 | 90,2 | 95 | 90,1 |
| | Y₂O₃ | 2,6 | 1 | 1,2 | 1,1 |
| | CeO₂ | 17,8 | 8,8 | 3,8 | 8,8 |
| Caractéristiques granulométriques | D₅₀ (µm) | 734 | 740 | 690 | 724 |
| | Sphéricité médiane | 0,87 | 0,89 | 0,96 | 0,93 |
| Autres caractéristiques physiques | Masse volumique apparente (g/cm³) | 5,33 | 5,35 | 5,62 | 4,84 |
| | Masse volumique relative (%) | > 99,7 | 99 | 99 | 96 |
| | Dureté HV_{(0,5/15)} | 984 | 1315 | 1228 | 1277 |

Les billes de la poudre de l'exemple 2 présentent une microstructure comportant des grains ramassés présentant une taille moyenne égale à 0,4 µm et des nodules allongés alumineux présentant une longueur moyenne égale à 1,5 µm.

Les billes de la poudre de l'exemple 3 présentent une microstructure comportant des grains ramassés présentant une taille moyenne égale à 0,5 µm et des nodules allongés alumineux présentant une longueur moyenne égale à 10,4 µm.

Les billes de la poudre de l'exemple 4 présentent une microstructure comportant des grains ramassés présentant une taille moyenne égale à 0,5 µm et des nodules allongés alumineux présentant une longueur moyenne égale à 2,9 µm.

Une quantité de 100 g de chaque poudre a ensuite été projetée, avec recirculation, sur une surface à traiter en acier XC65, au moyen d'un pistolet à effet Venturi muni d'une buse de projection de diamètre 8 mm, disposée à 150 mm de la surface à traiter, avec un angle de projection de 85° et à une surpression égale à 5 bar. La projection a été poursuivie jusqu'à obtention d'un taux de recouvrement égal à 125%.

Les précontraintes de compression dans la surface traitée ont ensuite été mesurées par diffraction des rayons X avec un appareil Siemens D500 à partir de l'analyse de la déformation moyenne des plans cristallographiques en fonction de l'orientation de ceux-ci.

### Résultats

Le tableau 2 suivant résume les résultats obtenus.

**(^{∗}) : hors invention Tableau 2**

| | Précontrainte de compression mesurée à une profondeur égale à | | |
|---|---|---|---|
| | 150 µm (MPa) | 175 µm (MPa) | 200 µm (MPa) |
| Exemple 1 (^{∗}) | 350 | 180 | 30 |
| Exemple 2 | 470 | 300 | 100 |
| Amélioration de la précontrainte de compression mesurée exemple 2 / exemple 1 (%) | +34,3 | +66,7 | +233,3 |
| Exemple 3 | 457 | 255 | 65 |
| Exemple 4 | 457 | 255 | 83 |
| Amélioration de la précontrainte de compression mesurée exemple 3 / exemple 1 (%) | +30,6 | +41,8 | +116,7 |
| Amélioration de la précontrainte de compression mesurée exemple 4 / exemple 1 (%) | +30,6 | +41,8 | +177,8 |

Une comparaison de l'exemple 2, utilisée dans le procédé selon l'invention, et de l'exemple 1 montre une amélioration de la précontrainte de compression mesurée à une profondeur égale à 150 µm égale à 34,3%, ladite précontrainte étant égale à 350 MPa pour l'exemple 1 et égale à 470 MPa pour l'exemple 2. L'amélioration de la précontrainte de compression d'un exemple, ici l'exemple 2, vis-à-vis d'une référence, dans le cas présent l'exemple 1, est égale à (précontrainte de compression mesurée pour l'exemple - précontrainte de compression mesurée pour la référence) / (précontrainte de compression mesurée pour l'exemple), exprimée en pourcentages. Il en est de même pour les précontraintes de compression mesurées à une profondeur égale à 175 µm et à 200 µm, l'amélioration étant égale à 66,7% et 233,3%, respectivement.

Une comparaison de l'exemple 3, utilisée dans le procédé selon l'invention, et de l'exemple 1 montre une amélioration de la précontrainte de compression mesurée à une profondeur égale à 150 µm égale à 30,6%, ladite précontrainte étant égale à 457 MPa pour l'exemple 3.

Une comparaison de l'exemple 4, utilisée dans le procédé selon l'invention, et de l'exemple 1 montre une amélioration de la précontrainte de compression mesurée à une profondeur égale à 150 µm égale à 30,6%, ladite précontrainte étant égale à 457 MPa pour l'exemple 4.

Il en est de même pour les précontraintes de compression mesurées à une profondeur égale à 175 µm et à 200 µm, l'amélioration étant égale à 41,8% et 116,7%, respectivement, pour la poudre de billes de l'exemple 3, et égale à 41,8% et 177,8%, respectivement, pour la poudre de billes de l'exemple 4.

Comme cela apparaît clairement à présent, l'invention fournit donc un procédé de grenaillage permettant de créer des précontraintes de compression plus élevées dans une couche superficielle de la pièce traitée, en particulier à une profondeur supérieure ou égale à 150 µm. Bien entendu, la présente invention n'est pas limitée aux modes de réalisation décrits et représentés fournis à titre d'exemples illustratifs et non limitatifs. En particulier, les billes pourraient présenter d'autres compositions ou d'autres granulométries que celles décrites ci-dessus et, d'autres systèmes de gélification pourraient également convenir pour fabriquer une poudre de billes frittées selon la revendication 1. Ainsi, US 5,466,400, FR 2 842438 et US 4,063,856 décrivent des procédés sol-gel applicables. FR 2 842438 et US 4,063,856 utilisent un système de gélification proche de celui décrit ci-dessus (à base d'alginate) alors que US 5,466,400 décrit un système de gélification très différent.

Le procédé décrit dans US 2009/0036291 et les procédés de formation de billes par pressage ou par granulation sont également envisageables.

## Revendications

1. Procédé de grenaillage comportant une étape de projection d'une poudre sur une surface d'une pièce à traiter, ladite poudre étant constituée de particules frittées, plus de 95% en masse des particules étant des billes, la poudre présentant
- une analyse chimique telle que, en pourcentages en masse sur la base des oxydes,
- ZrO₂ partiellement stabilisée avec Ce02 et Y₂O₃ : complément à 100%, CeO₂ et Y₂O₃ étant présents en des quantités telles que, en pourcentage molaire sur la base de la somme de ZrO₂, Ce02 et Y₂O₃,
| | |
|---|---|
| CeO₂: | 2,5 - 11 mol% et |
| Y₂O₃ : | 0,5 - 2 mol%, |
- Al₂O₃ : 3 - 50%
- additif choisi parmi CaO, les oxydes de manganèse, ZnO, les oxydes de praséodyme, SrO, les oxydes de cuivre, Nd₂O₃, BaO, les oxydes de fer, et leurs mélanges : 0,2 - 6%
la teneur en CaO étant inférieure à 2%,
- éléments autres que ZrO₂, CeO₂, Y₂O₃, Al₂O₃, CaO, les oxydes de manganèse, ZnO, les oxydes de praséodyme, SrO, les oxydes de cuivre, Nd₂O₃, BaO, et les oxydes de fer : ≤ 5%
les oxydes de manganèse, les oxydes de praséodyme, les oxydes de cuivre et les oxydes de fer étant exprimés sous la forme MnO, Pr₆O₁₁, CuO et Fe₂O₃, respectivement, et
- une masse volumique relative supérieure à 95%.

2. Procédé selon la revendication précédente, dans lequel l'additif est choisi parmi CaO, les oxydes de manganèse, ZnO, SrO, BaO, et leurs mélanges.

3. Procédé selon la revendication immédiatement précédente, dans lequel l'additif comporte :
- CaO, la teneur en CaO dans ladite poudre étant supérieure à 0,2%, et
- un deuxième composé d'additif choisi parmi les oxydes de manganèse, ZnO, SrO, BaO et leurs mélanges, la teneur dudit deuxième composé d'additif dans ladite poudre étant supérieure à 0,1%,
en pourcentages en masse sur la base des oxydes de la poudre.

4. Procédé selon la revendication immédiatement précédente, dans lequel l'additif est un mélange d'un ou plusieurs oxyde(s) de manganèse et de CaO, la teneur en oxyde(s) de manganèse exprimée sous la forme MnO, dans ladite poudre, étant supérieure à 0,1% et inférieure à 4% et la teneur en CaO étant supérieure à 0,2% et inférieure à 4%, en pourcentage en masse sur la base des oxydes.

5. Procédé selon l'une quelconque des revendications précédentes, dans lequel la teneur en « éléments autres que ZrO₂, CeO₂, Y₂O₃, Al₂O₃, CaO, les oxydes de manganèse, ZnO, les oxydes de praséodyme, SrO, les oxydes de cuivre, Nd₂O₃, BaO, et les oxydes de fer » dans ladite poudre est inférieure à 2,0%, en pourcentage massique sur la base des oxydes.

6. Procédé selon l'une quelconque des revendications précédentes, dans lequel la teneur en Al₂O₃ dans ladite poudre est supérieure à 8% et inférieure à 40%, en pourcentage massique sur la base des oxydes.

7. Procédé selon l'une quelconque des revendications précédentes, dans lequel la teneur molaire en Y₂O₃ dans ladite poudre est supérieure à 0,7% et inférieure à 1,7%, en pourcentages molaires sur la base de la somme de ZrO₂, Ce02 et Y₂O₃.

8. Procédé selon l'une quelconque des revendications précédentes, dans lequel la teneur molaire en Ce02 dans ladite poudre est comprise entre 8,0% et 10,0%, en pourcentages molaires sur la base de la somme de ZrO₂, Ce02 et Y₂O₃.

9. Procédé selon l'une quelconque des revendications précédentes, dans lequel la teneur en Al₂O₃ dans ladite poudre est supérieure à 15% et inférieure à 35%, et/ou la teneur en Si02 est inférieure à 1,5%, en pourcentage massique sur la base des oxydes.

10. Procédé selon l'une quelconque des revendications 1 à 7, dans lequel la teneur molaire en Ce02 dans ladite poudre est supérieure à 3% et inférieure à 6,0%, en pourcentages molaires sur la base de la somme de ZrO₂, Ce02 et Y₂O₃.

11. Procédé selon la revendication immédiatement précédente, dans lequel la teneur en Al₂O₃ dans ladite poudre est supérieure à 5% et inférieure à 19%, en pourcentage massique sur la base des oxydes.

12. Procédé selon l'une quelconque des revendications précédentes, ladite poudre présentant une masse volumique relative supérieure à 98%.

13. Procédé selon l'une quelconque des revendications précédentes, dans lequel les particules sont projetées à une vitesse supérieure à 40 m/s, suivant une direction formant un angle de projection avec la surface à traiter supérieur à 45°.

14. Procédé selon l'une quelconque des revendications précédentes, dans lequel la pièce à traiter est choisie dans le groupe formé par une pièce automobile, une pièce d'un engin aéronautique, un bijou, une montre, un bracelet, un collier, une bague, une broche, une épingle de cravate, un sac à main, un meuble, un ustensile ménager, une poignée, un bouton, un placage, une partie visible d'un équipement de bien de consommation, une partie de monture de lunettes, un article de vaisselle et un cadre.

15. Utilisation d'un procédé selon l'une quelconque des revendications précédentes, pour créer des précontraintes de compression dans la couche superficielle d'une pièce à traiter, la poudre projetée présentant une taille médiane D₅₀ supérieure à 40 µm et inférieure à 1200 µm, ou pour modifier l'aspect de la surface d'une pièce à traiter, la poudre projetée présentant une taille médiane D₅₀ inférieure à 200 µm.

## Patentansprüche

1. Kugelstrahlverfahren, das einen Schritt des Verspritzens eines Pulvers auf eine Fläche eines zu behandelnden Werkstücks aufweist, wobei das Pulver aus gesinterten Partikeln besteht, wobei es sich bei mehr als 95 Massen-% der Partikel um Kugeln handelt, wobei das Pulver Folgendes aufweist
- eine chemische Analyse, die folgendermaßen ist, nach Massenprozentanteilen auf Grundlage der Oxide,
- ZrO₂, teilweise mit CeO₂ und Y₂O₃ stabilisiert:
zu 100 % fehlender Anteil,
wobei CeO₂ und Y₂O₃ in derartigen Mengen vorliegen, dass nach Molprozentanteilen, auf Grundlage der Summe von ZrO₂, CeO₂ und Y₂O₃,
CeO₂: 2,5 bis 11 Mol-% und
Y₂O₃: 0,5 bis 2 Mol-%,
- Al₂O₃: 3 bis 50 %
- Zusatzstoff, ausgewählt aus CaO, Manganoxiden, ZnO, Praseodymoxiden, SrO, Kupferoxiden, Nd₂O₃, BaO, Eisenoxiden und deren Mischungen: 0,2 bis 6 %
wobei der Gehalt an CaO geringer als 2 % ist,
- Elemente, bei denen es sich nicht um ZrO₂, CeO₂, Y₂O₃, Al₂O₃, CaO, Manganoxide, ZnO, Praseodymoxide, SrO, Kupferoxide, Nd₂O₃, BaO und Eisenoxide handelt: ≤ 5%
wobei die Manganoxide, die Praseodymoxide, die Kupferoxide und die Eisenoxide in Form von MnO, Pr₆O₁₁, CuO beziehungsweise Fe₂O₃ ausgedrückt sind, und
- eine relative volumenbezogene Masse von 95 %.

2. Verfahren nach dem vorhergehenden Anspruch, wobei der Zusatzstoff aus CaO, Manganoxiden, ZnO, SrO, BaO und deren Mischungen ausgewählt ist.

3. Verfahren nach dem unmittelbar vorhergehenden Anspruch, wobei der Zusatzstoff Folgendes aufweist:
- CaO, wobei der Gehalt an CaO in dem Pulver mehr als 0,2 % beträgt, und
- eine zweite Zusatzstoffverbindung, die aus Manganoxiden, ZnO, SrO, BaO und deren Mischungen ausgewählt ist, wobei der Gehalt der zweiten Zusatzstoffverbindung in dem Pulver mehr als 0,1 % beträgt,
in Massenprozentanteilen, auf Grundlage der Oxide des Pulvers.

4. Verfahren nach dem unmittelbar vorhergehenden Anspruch, wobei es sich bei dem Zusatzstoff um eine Mischung aus einem oder mehreren Oxid(en) von Mangan und aus CaO handelt, wobei der Gehalt als Manganoxid(en), welcher in Form von MnO ausgedrückt wird, in dem Pulver mehr als 0,1 % und weniger als 4 % beträgt und der Gehalt an CaO mehr als 0,2 % und weniger als 4 % beträgt, nach Massenprozentanteilen auf Grundlage der Oxide.

5. Verfahren nach einem beliebigen der vorhergehenden Ansprüche, wobei der Gehalt an "Elementen, bei denen es sich nicht um ZrO₂, CeO₂, Y₂O₃, Al₂O₃, CaO, Manganoxide, ZnO, Praseodymoxide, SrO, Kupferoxide, Nd₂O₃, BaO und Eisenoxide handelt", in dem Pulver weniger als 2,0 % beträgt, nach Massenprozentanteilen auf Grundlage der Oxide.

6. Verfahren nach einem beliebigen der vorhergehenden Ansprüche, wobei der Gehalt an Al₂O₃ in dem Pulver mehr als 8 % und weniger als 40 % beträgt, nach Massenprozentanteilen auf Grundlage der Oxide.

7. Verfahren nach einem beliebigen der vorhergehenden Ansprüche, wobei der molare Gehalt an Y₂O₃ in dem Pulver mehr als 0,7 % und weniger als 1,7 % beträgt, nach Molprozentanteilen auf Grundlage der Summe von ZrO₂, CeO₂ und Y₂O₃.

8. Verfahren nach einem beliebigen der vorhergehenden Ansprüche, wobei der molare Gehalt an CeO₂ in dem Pulver im Bereich von 8,0 % bis 10,0 % liegt, nach Molprozentanteilen auf Grundlage der Summe von ZrO₂, CeO₂ und Y₂O₃ .

9. Verfahren nach einem beliebigen der vorhergehenden Ansprüche, wobei der Gehalt an Al₂O₃ in dem Pulver mehr als 15 % und weniger als 35 % beträgt und/oder der Gehalt an SiO₂ weniger als 1,5 % beträgt, nach Massenprozentanteilen auf Grundlage der Oxide.

10. Verfahren nach einem beliebigen der Ansprüche 1 bis 7, wobei der molare Gehalt an CeO₂ in dem Pulver mehr als 3 % und weniger als 6,0 % beträgt, nach Molprozentanteilen auf Grundlage der Summe von ZrO₂, CeO₂ und Y₂O₃ .

11. Verfahren nach dem unmittelbar vorhergehenden Anspruch, wobei der Gehalt an Al₂O₃ in dem Pulver mehr als 5 % und weniger als 19 % beträgt, nach Massenprozentanteilen auf Grundlage der Oxide.

12. Verfahren nach einem beliebigen der vorhergehenden Ansprüche, wobei das Pulver eine relative volumenbezogene Masse von mehr als 98 % aufweist.

13. Verfahren nach einem beliebigen der vorhergehenden Ansprüche, wobei die Partikel mit einer Geschwindigkeit von mehr als 40 m/s verspritzt werden, gemäß einer Richtung, die mit der zu behandelnden Fläche einen Aufspritzwinkel von mehr als 45° bildet.

14. Verfahren nach einem beliebigen der vorhergehenden Ansprüche, wobei das zu behandelnde Werkstück aus der Gruppe ausgewählt ist, die von einem Automobilbauteil, einem Teil eines Luftfahrzeugs, einem Schmuckstück, einer Uhr, einem Armband, einer Halskette, einem Ring, einer Brosche, einer Krawattennadel, einer Handtasche, einem Möbelstück, einem Haushaltsgegenstand, einem Handgriff, einem Knopf, einer Verblendung, einem sichtbaren Abschnitt eines Verbrauchsgutes, einem Abschnitt eines Brillengestells, einem Geschirrartikel und einem Rahmen gebildet wird.

15. Anwendung eines Verfahrens nach einem beliebigen der vorhergehenden Ansprüche, um Druckvorspannungen in der oberflächlichen Schicht eines zu behandelnden Werkstück zu erzeugen, wobei das verspritzte Pulver einen Medianwert der Größe D₅₀ von mehr als 40 µm und weniger als 1200 µm aufweist, oder um das Aussehen der Fläche eines zu behandelnden Werkstücks zu verändern, wobei das verspritzte Pulver einen Medianwert der Größe D₅₀ von weniger als 200 µm aufweist.

## Claims

1. Shot-blasting process comprising a stage of projection of a powder onto a surface of a component to be treated, said powder consisting of sintered particles, more than 95% by weight of the particles being beads, the powder exhibiting
- a chemical analysis such that, as percentages by weight based on the oxides,
- ZrO₂ partially stabilized with CeO₂ and Y₂O₃: remainder to 100%,
CeO₂ and Y₂O₃ being present in amounts such that, as molar percentage based on the sum of ZrO₂,
CeO₂ and Y₂O₃,
| | |
|---|---|
| CeO₂: | 2.5 - 11 mol% and |
| Y₂O₃: | 0.5 - 2 mol%, |
- Al₂O₃: 3 - 50%
- additive chosen from CaO, manganese oxides, ZnO, praseodymium oxides, SrO, copper oxides, Nd₂O₃, BaO, iron oxides and their mixtures: 0.2 - 6% the CaO content being less than 2%,
- elements other than ZrO₂, CeO₂, Y₂O₃, Al₂O₃, CaO, manganese oxides, ZnO, praseodymium oxides, SrO, copper oxides, Nd₂O₃, BaO and iron oxides: ≤ 5% the manganese oxides, the praseodymium oxides, the copper oxides and the iron oxides being expressed in the MnO, Pr₆O₁₁, CuO and Fe₂O₃ form respectively, and
- a relative density of greater than 95%.

2. Process according to the preceding claim, in which the additive is chosen from CaO, manganese oxides, ZnO, SrO, BaO and their mixtures.

3. Process according to the immediately preceding claim, in which the additive comprises:
- CaO, the CaO content in said powder being greater than 0.2%, and
- a second additive compound chosen from manganese oxides, ZnO, SrO, BaO and their mixtures, the content of said second additive compound in said powder being greater than 0.1%,
as percentages by weight based on the oxides of the powder.

4. Process according to the immediately preceding claim, in which the additive is a mixture of one or more manganese oxide (s) and of CaO, the content of manganese oxide(s), expressed in the MnO form, in said powder being greater than 0.1% and less than 4% and the CaO content being greater than 0.2% and less than 4%, as percentage by weight based on the oxides.

5. Process according to any one of the preceding claims, in which the content of "elements other than ZrO₂, CeO₂, Y₂O₃, Al₂O₃, CaO, manganese oxides, ZnO, praseodymium oxides, SrO, copper oxides, Nd₂O₃, BaO and iron oxides" in said powder is less than 2.0%, as percentage by weight based on the oxides.

6. Process according to any one of the preceding claims, in which the Al₂O₃ content in said powder is greater than 8% and less than 40%, as percentage by weight based on the oxides.

7. Process according to any one of the preceding claims, in which the molar content of Y₂O₃ in said powder is greater than 0.7% and less than 1.7%, as molar percentages based on the sum of ZrO₂, CeO₂ and Y₂O₃.

8. Process according to any one of the preceding claims, in which the molar content of CeO₂ in said powder is between 8.0% and 10.0%, as molar percentages based on the sum of ZrO₂, CeO₂ and Y₂O₃.

9. Process according to any one of the preceding claims, in which the Al₂O₃ content in said powder is greater than 15% and less than 35%, and/or the SiO₂ content is less than 1.5%, as percentage by weight based on the oxides.

10. Process according to any one of Claims 1 to 7, in which the molar content of CeO₂ in said powder is greater than 3% and less than 6.0%, as molar percentages based on the sum of ZrO₂, CeO₂ and Y₂O₃.

11. Process according to the immediately preceding claim, in which the Al₂O₃ content in said powder is greater than 5% and less than 19%, as percentage by weight based on the oxides.

12. Process according to any one of the preceding claims, said powder exhibiting a relative density of greater than 98%.

13. Process according to any one of the preceding claims, in which the particles are projected at a speed of greater than 40 m/s, along a direction forming a projection angle with the surface to be treated of greater than 45°.

14. Process according to any one of the preceding claims, in which the component to be treated is chosen from the group formed by an automobile component, a component of an aeronautical vehicle, a piece of jewelry, a watch, a bracelet, a necklace, a ring, a brooch, a tie pin, a handbag, an item of furniture, a household utensil, a handle, a button, a veneer, a visible part of an item of consumer goods equipment, a part of a spectacle frame, an article of kitchenware and a frame.

15. Use of a process according to any one of the preceding claims, for creating compressive prestresses in the surface layer of a component to be treated, the projected powder exhibiting a median size D₅₀ of greater than 40 µm and less than 1200 µm, or for modifying the appearance of the surface of a component to be treated, the projected powder exhibiting a median size D₅₀ of less than 200 µm.
